(19) **Europäisches Patentamt / European Patent Office / Office européen des brevets**

(11) **EP 4 359 763 B1**

(12) **FASCICULE DE BREVET EUROPEEN**

(45) Date de publication et mention de la délivrance du brevet:
**29.10.2025 Bulletin 2025/44**

(21) Numéro de dépôt: **22733672.4**

(22) Date de dépôt: **21.06.2022**

(51) Classification Internationale des Brevets (IPC):
**G01N 21/31** *(2006.01)* **G01N 21/3504** *(2014.01)*
**G01N 21/61** *(2006.01)*

(52) Classification Coopérative des Brevets (CPC):
**G01N 21/314;** G01N 21/3504; G01N 21/61;
G01N 2021/3166; G01N 2201/121

(86) Numéro de dépôt international:
**PCT/EP2022/066894**

(87) Numéro de publication internationale:
**WO 2022/268821 (29.12.2022 Gazette 2022/52)**

(54) **PROCÉDÉ ET DISPOSITIF D'ESTIMATION D'UNE CONCENTRATION D'UNE ESPÈCE GAZEUSE À PARTIR D'UN SIGNAL ÉMIS PAR UN CAPTEUR DE GAZ OPTIQUE**

**VERFAHREN UND VORRICHTUNG ZUR ABSCHÄTZUNG EINER KONZENTRATION EINER GASSPEZIES AUF DER GRUNDLAGE EINES VON EINEM OPTISCHEN GASDETEKTOR EMITTIERTEN SIGNALS**

**METHOD AND DEVICE FOR ESTIMATING A CONCENTRATION OF A GAS SPECIES ON THE BASIS OF A SIGNAL EMITTED BY AN OPTICAL GAS DETECTOR**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2021 FR 2106648**

(43) Date de publication de la demande:
**01.05.2024 Bulletin 2024/18**

(73) Titulaire: **Elichens**
**38040 Grenoble (FR)**

(72) Inventeurs:
- **BEKKAR, Reda**
  **38040 Grenoble (FR)**
- **PEYRAT, Paul-Alexandre**
  **38040 Grenoble (FR)**

(74) Mandataire: **INNOV-GROUP**
**209 Avenue Berthelot**
**69007 Lyon (FR)**

(56) Documents cités:
**WO-A1-2018/202974 US-A1- 2008 114 552**

**Description**

## DOMAINE TECHNIQUE

Le domaine technique est l'utilisation d'un capteur de gaz optique pour estimer une concentration d'une espèce gazeuse.

## ART ANTERIEUR

Les capteurs de gaz sont utilisés dans de nombreux domaines, pour des applications grand public ou dans l'industrie. Différents types de capteurs sont à présent utilisables, basés sur différents principes, par exemple des principe optiques ou électrochimiques.

Les capteurs optiques permettent de suivre la concentration d'une espèce gazeuse en se basant sur l'absorption optique. Ainsi, connaissant une bande spectrale d'absorption d'une espèce gazeuse, sa concentration peut être déterminée par une estimation de l'absorption de la lumière traversant le gaz, en utilisant la loi de Beer-Lambert.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, l'onde lumineuse étant partiellement absorbée par l'espèce gazeuse que l'on souhaite quantifier. La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans les documents US 5,026,992 A ou WO 2007/064370 A2.

Les capteurs de gaz génèrent un signal de détection, représentatif d'une concentration d'une espèce gazeuse que l'on souhaite estimer. Cependant, le signal de détection, résultant des composants actifs du capteur, peut être affecté d'une fluctuation statistique importante. Et cela est particulièrement vrai pour les capteurs optiques, dans lesquels le signal de détection est affecté par des fluctuations de l'intensité d'émission de la source de lumière et/ou de la sensibilité de détection du photodétecteur.

Le document WO 2018/202974 A1 décrit un capteur de gaz de type NDIR, dans lequel le signal de détection fait l'objet d'un filtrage passe-bas, de façon à réduire l'effet des fluctuations.

Cependant, les inventeurs ont constaté que ce filtrage, bien qu'efficace, pouvait entraîner une certaine latence dans la fonction de réponse du capteur. Or, certaines applications supposent que le capteur de gaz ait un temps de réponse rapide. Il peut par exemple s'agir d'applications liées à la détection d'une fuite de gaz.

US2008114552 décrit un capteur de gaz mettant en œuvre une correction du signal détecté. Les inventeurs proposent un procédé mettant en œuvre un traitement du signal de détection, résultant du capteur, de façon à réduire l'effet des fluctuations statistiques des composants actifs du capteur, tout en offrant un temps de réponse rapide, de façon à réagir rapidement lorsque la concentration de l'espèce gazeuse varie brusquement.

## EXPOSE DE L'INVENTION

Un premier objet de l'invention est un procédé d'estimation d'une concentration d'une espèce gazeuse en différents instants de mesure, le procédé mettant en œuvre un capteur de gaz, le procédé comportant, à chaque instant de mesure postérieur à une phase d'initialisation, la phase d'initialisation établissant un signal de variation initial et un signal corrigé initial :

   a) formation d'un signal de détection par le capteur de gaz ;

   b) calcul du signal corrigé, à l'instant de mesure, le signal corrigé étant établi à partir d'une somme comportant :

   - un terme de prédiction du signal corrigé à l'instant de mesure, pondéré par un premier facteur de pondération, le terme de prédiction étant déterminé à partir :

      • d'un signal de variation calculé à un instant prédédent l'instant de mesure ;

      • d'un signal corrigé déterminé à l'instant précédent;

   - le signal de détection, à l'instant de mesure, pondéré par un deuxième facteur de pondération;

   c) calcul d'un signal de variation, à l'instant de mesure, le signal de variation étant établi à partir d'une somme pondérée:

- d'une différence entre les signaux corrigés respectivement à l'instant de mesure et à l'instant précédent;
- du signal de variation déterminé à l'instant précédent ;

d) estimation de la concentration de l'espèce gazeuse, à l'instant de mesure, à partir du signal corrigé;

e) réitération des étapes a) à d), en incrémentant l'instant de mesure.

Le capteur de gaz comporte :

- une enceinte, configurée pour contenir un gaz ;
- une source de lumière et un photodétecteur, le photodétecteur étant agencé pour détecter une lumière, émise par la source de lumière, s'étant propagée entre la source de lumière et le photodétecteur.

Lors de l'étape a), le signal de détection est formé par le photodétecteur.

De préférence, lors d'une première itération des étapes a) à e), le signal corrigé à l'instant précédent et le signal de variation à l'instant précédent résultent de la phase d'initialisation. Ainsi, la phase d'initialisation permet de définir une valeur initiale du signal corrigé et une valeur initiale du signal de variation.

De préférence, après la deuxième itération, dans le terme de prédiction, le signal de variation, calculé à l'instant précédent, est pondéré par un facteur de pénalisation strictement supérieur à 0 et strictement inférieur à 1.

Le facteur de pénalisation peut être calculé à partir :

- d'une estimation de la concentration de l'espèce gazeuse à l'instant précédent ;
- d'une estimation de la concentration de l'espèce gazeuse à un instant postérieur à l'instant de mesure.

De préférence, après la deuxième itération, l'estimation de la concentration de l'espèce gazeuse à l'instant postérieur à l'instant de mesure est réalisée par extrapolation à partir des signaux respectivement corrigés à l'instant de mesure et à l'instant précédent.

Le facteur de pénalisation peut être établi à partir de $e^{-\frac{\hat{c}_x(t-1)^n}{\hat{c}_x(t+)}}$ , où :

- $\hat{c}_x(t-1)$ est estimation de la concentration de l'espèce gazeuse à l'instant précédent;
- $\hat{c}_x(t_+)$ est la concentration estimée de l'espèce gazeuse à l'instant postérieur à l'instant de mesure ;
- $n$ est un réel compris entre 0 et 1.

Le procédé peut comporter, entre l'étape c) et l'étape d), les sous-étapes :

- (i) calcul d'une différence entre le signal issu du capteur, à l'instant de mesure, et le signal corrigé à l'instant de mesure, résultant de l'étape b) ;
- (ii) comparaison des signes respectifs du signal de variation, résultant de l'étape c), et de la différence résultant de la sous-étape (i) ;
- (iii) lorsque la comparaison réalisée dans la sous-étape (ii) indique que les signes comparés sont contraires, remplacement du signal corrigé, résultant de l'étape b), par le signal corrigé à l'instant précédent, éventuellement pondéré par un terme de pondération positif et non nul.

Dans la sous-étape (iii), lorsque les signes comparés sont contraires, le signal corrigé (y(t)), résultant de l'étape b), peut être remplacé par le signal corrigé à l'instant précédent, pondéré par le terme de pondération, dont la valeur dépend du signal de variation résultant de l'étape c).

Le deuxième facteur de pondération peut être le complémentaire à 1 du premier facteur de pondération.

Le premier facteur de pondération peut être compris entre 0.75 et 1.

Un autre objet de l'invention est un dispositif d'estimation d'une concentration d'une espèce gazeuse dans un gaz, comportant :

- un capteur de gaz, comportant une enceinte, destinée à contenir un gaz .
- une source de lumière et un photodétecteur, le photodétecteur étant agencé pour détecter une lumière, émise par la source de lumière, s'étant propagée entre la source de lumière et le photodétecteur ;
- le photodétecteur étant configuré pour générer un signal de détection représentatif d'une concentration d'une espèce gazeuse dans l'enceinte ;
- une unité de traitement, configurée pour mettre en œuvre les étapes b) à e) d'un procédé selon le premier objet de l'invention ;

le dispositif étant caractérisé en ce que le signal de détection est établi à partir d'une intensité lumineuse détectée par le photodétecteur.

Selon un mode de réalisation,

- le capteur de gaz comporte un photodétecteur de référence, le photodétecteur de référence étant agencé pour détecter une lumière, émise par la source de lumière, considérée comme non atténuée par l'espèce gazeuse, le photodétecteur de référence émettant un signal de référence;
- le dispositif est tel que suite à la phase d'initialisation, le signal de référence fait l'objet d'un lissage temporel. Le lissage temporel est par exemple une moyenne glissante.

L'invention sera mieux comprise à la lecture de l'exposé des exemples de réalisation présentés, dans la suite de la description, en lien avec les figures listées ci-dessous.

## FIGURES

La figure 1 représente un exemple de capteur de gaz permettant une mise en œuvre de l'invention.

La figure 2 illustre la latence de la réponse d'un capteur de gaz.

La figure 3 représente les principales étapes d'un procédé de mise en œuvre de l'invention.

La figure 4A illustre l'effet d'une variante, visant à diminuer un effet de surestimation temporaire de la concentration, désignée par le terme « overshoot ».

La figure 4B illustre l'effet d'une variante, conférant un effet anti-rebond, évitant des oscillations du signal corrigé.

Les figures 5A, 5B et 5C montrent des concentrations estimées de $CH_4$ lors d'essais expérimentaux au cours desquels la concentration en $CH_4$ a subi une augmentation en créneau.

Les figures 6A, 6B et 6C montrent des mesures expérimentales des signaux de détection et des signaux corrigés lors des essais décrits en lien avec les figures 5A, 5B et 5C.

Les figures 7A, 7B et 7C montrent des concentrations estimées de $CH_4$ lors d'essais expérimentaux au cours desquels la concentration en $CH_4$ a subi une augmentation en créneau.

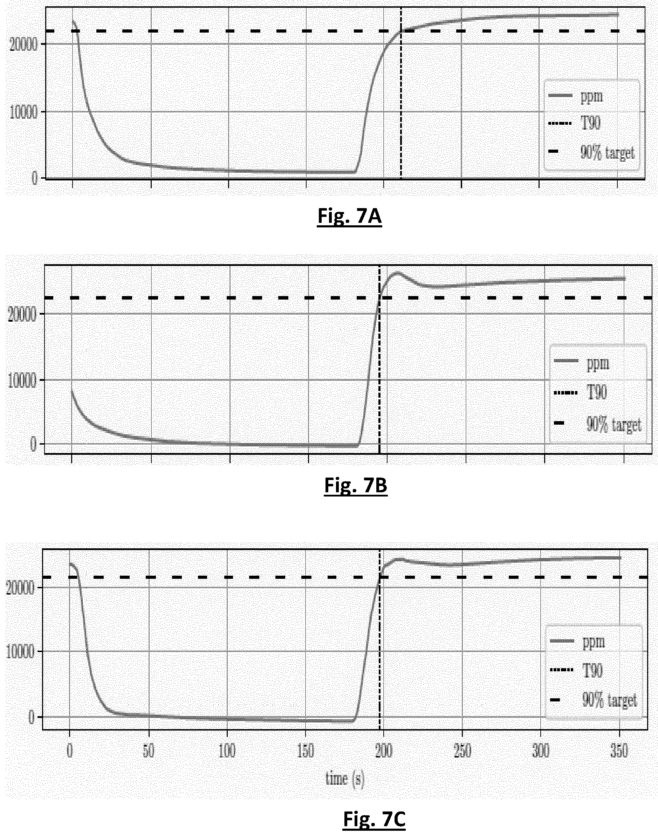

Sur les figures 7A, 7B et 7C, on a représenté la détermination d'un temps de réponse.

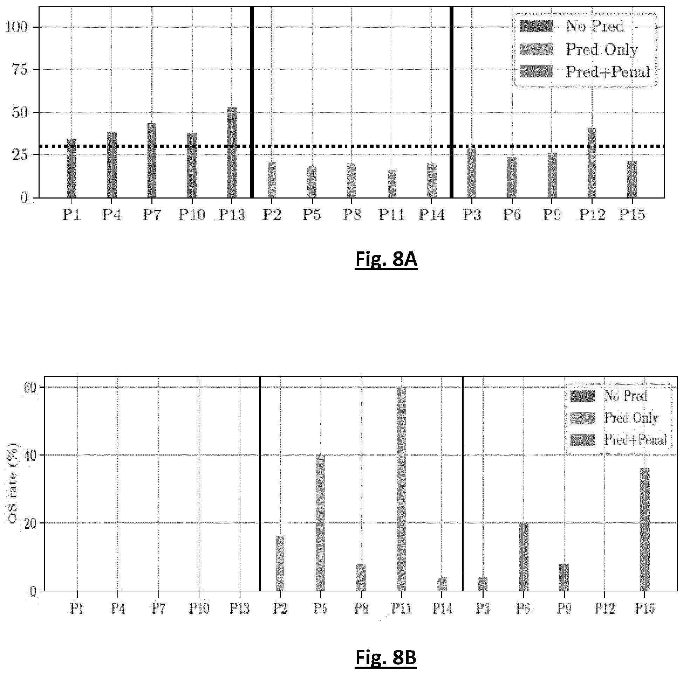

La figure 8A montre une moyenne de temps de réponse mesurés pour différents capteurs, chaque capteur étant exposé à une concentration de $CH_4$ augmentant selon un créneau.

La figure 8B montre un pourcentage d'occurrence d'un l'overshoot mesuré pour différents capteurs, chaque capteur étant exposé à une concentration de $CH_4$ augmentant selon un créneau.

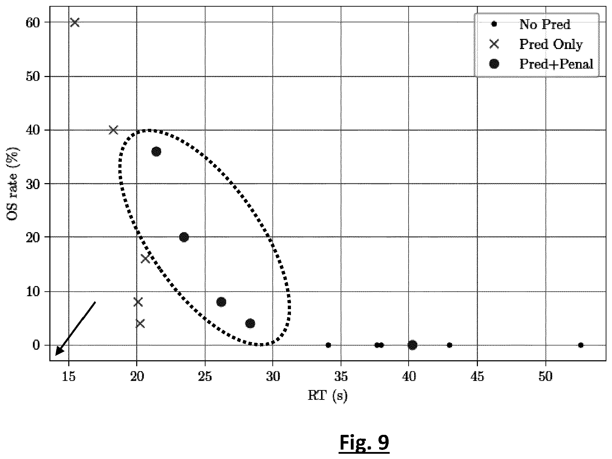

La figure 9 montre une évolution de la moyenne de temps de réponse et du pourcentage d'occurrence d'overshoot respectivement déterminés pour différents capteurs.

## EXPOSE DE MODES DE REALISATION PARTICULIERS

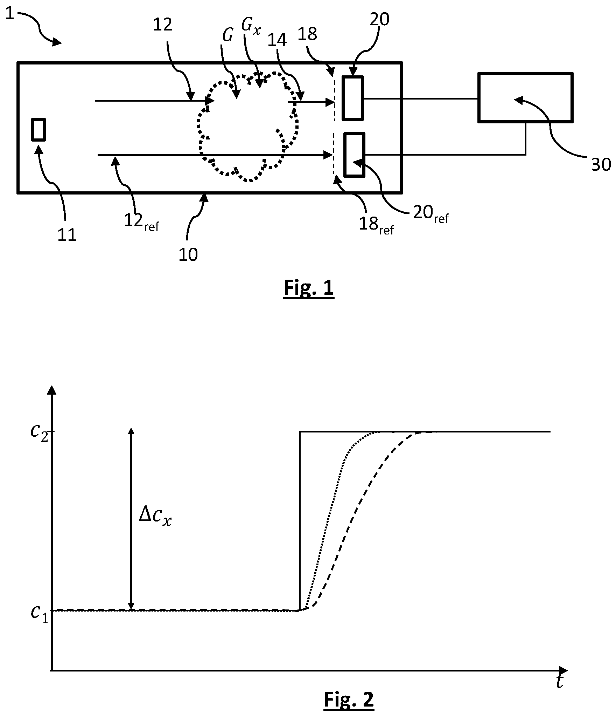

La figure 1 est un exemple d'un capteur de gaz 1. Le gaz $G$ comporte une espèce gazeuse $G_x$ dont on cherche à déterminer une quantité $c_x(t)$, par exemple une concentration, à un instant de mesure $t$. L'espèce gazeuse $G_x$ absorbe une part mesurable de la lumière dans une bande spectrale d'absorption $\Delta_x$.

Le capteur comporte une enceinte 10 définissant un espace interne à l'intérieur duquel se trouvent :

- une source de lumière 11, apte à émettre une onde lumineuse 12, dite onde lumineuse incidente, de façon à illuminer le gaz $G$ s'étendant dans l'espace interne. L'onde lumineuse incidente 12 s'étend selon une bande spectrale d'illumination $\Delta_{12}$.
- Un photodétecteur 20, dit photodétecteur de mesure, configuré pour détecter une onde lumineuse 14 transmise par le gaz $G$, sous l'effet de l'illumination de ce dernier par l'onde lumineuse incidente 12. L'onde lumineuse 14 est désignée par le terme onde lumineuse de mesure. Elle est détectée, par le photodétecteur de mesure 20, dans une bande spectrale de mesure $\Delta_{mes}$.
- Avantageusement, un photodétecteur de référence $20_{ref}$, configuré pour détecter une onde lumineuse $12_{ref}$, dite de référence dans une bande spectrale de référence $\Delta_{ref}$. La bande spectrale de référence $\Delta_{ref}$ est une bande spectrale dans laquelle on considère que l'absorption de l'onde lumineuse 12 par le gaz $G$ est négligeable.
- une unité de traitement 30, pour estimer une concentration de l'espèce gazeuse à chaque instant de mesure en fonction d'une intensité de l'onde lumineuse 14 transmise par le gaz G. Il peut par exemple s'agir d'un microprocesseur.

La bande spectrale de référence $\Delta_{ref}$ est différente de la bande spectrale de mesure $\Delta_{mes}$. La bande spectrale de mesure $\Delta_{mes}$ peut notamment être plus large que la bande spectrale de référence $\Delta_{ref}$. La bande spectrale de mesure $\Delta_{mes}$ peut comprendre la bande spectrale de référence $\Delta_{ref}$.

La source de lumière 11 est apte à émettre l'onde lumineuse incidente 12, selon la bande spectrale d'illumination $\Delta_{12}$, cette dernière pouvant s'étendre entre le proche ultraviolet et l'infrarouge moyen, par exemple entre 200 nm et 10 $\mu$m, et le plus souvent entre 1 $\mu$m et 10 $\mu$m. La bande spectrale d'absorption $\Delta_x$ de l'espèce gazeuse $G_x$ analysée est comprise dans la bande spectrale d'illumination $\Delta_{12}$. La source de lumière 11 peut notamment être impulsionnelle, l'onde lumineuse incidente 12 étant une impulsion de durée généralement comprise entre 100 ms et 1 s. La source de lumière 11 peut notamment être une source de lumière de type filament suspendu et chauffé à une température comprise entre 400°C et 800°C. Son spectre d'émission, dans la bande spectrale d'illumination $\Delta_{12}$, correspond au spectre d'émission d'un corps noir.

Le photodétecteur de mesure 20 est de préférence associé à un filtre optique 18, définissant la bande spectrale de mesure $\Delta_{mes}$ englobant tout ou partie de la bande spectrale d'absorption $\Delta_x$ de l'espèce gazeuse.

Dans l'exemple considéré, le photodétecteur de mesure 20 est une thermopile, apte à délivrer un signal dépendant de l'intensité de l'onde lumineuse détectée. De façon alternative, le photodétecteur de mesure peut être une photodiode ou un autre type de photodétecteur.

Le photodétecteur de référence $20_{ref}$ est disposé à côté du photodétecteur de mesure 20 et est de même type que ce dernier. Il est associé à un filtre optique, dit filtre optique de référence $18_{ref}$. Le filtre optique de référence $18_{ref}$ définit la bande spectrale de référence $\Delta_{ref}$ correspondant à une plage de longueurs d'onde non absorbées par l'espèce gazeuse considérée. La bande passante de référence $\Delta_{ref}$ est par exemple centrée autour de la longueur d'onde 3.91 $\mu$m.

L'intensité $I(t)$ de l'onde lumineuse 14 détectée par le photodétecteur de mesure 20, dite intensité de mesure, à un instant de mesure $t$, dépend de la concentration $c_x(t)$ à l'instant de mesure $t$, selon la relation de Beer-Lambert :

$$abs(t) = 1 - \frac{I(t)}{I_0(t)} = 1 - e^{-\mu(c_x(t))l} \quad (1)$$

où :

- $\mu(c_x(t))$ est un coefficient d'absorption de la lumière, dépendant de la concentration $c_x(t)$ à l'instant de mesure $t$;
- $l$ est une longueur du parcours de l'onde lumineuse 12 à travers le gaz, entre la source de lumière 11 et le photodétecteur de mesure 20 ;
- $I_0(t)$ est l'intensité de l'onde lumineuse incidente, à l'instant $t$, qui correspond à l'intensité de l'onde lumineuse, dans la bande spectrale de mesure $\Delta_{mes}$, qui atteindrait le photodétecteur de mesure 20 en l'absence de gaz absorbant dans l'enceinte.

La comparaison entre $I(t)$ et $I_0(t)$, prenant la forme d'un ratio $\frac{I(t)}{I_0(t)}$, permet de définir une absorption $abs(t)$ générée par l'espèce gazeuse considérée à l'instant $t$.

Lors de chaque impulsion de la source de lumière 11, on peut ainsi déterminer $\mu(c(t))$, ce qui permet d'estimer $\hat{c}_x(t)$ sachant que la relation entre $\hat{c}_x(t)$ et $\mu(\hat{c}_x(t))$ est connue.

L'expression (1) suppose une maîtrise de l'intensité $I_0(t)$ de l'onde lumineuse incidente 12 à l'instant de mesure $t$. L'unité de traitement 30 est configurée pour recevoir un signal représentatif de l'intensité $I_{ref}(t)$ de l'onde lumineuse de référence $12_{ref}$, mesurée par le photodétecteur de référence $20_{ref}$ à chaque instant de mesure $t$. L'unité de traitement 30 estime l'intensité $\hat{I}_0(t)$ à partir de $I_{ref}(t)$.

Comme évoqué en lien avec l'art antérieur, l'intensité peut être soumise à des fluctuations de haute fréquence, dues au photodétecteur de mesure 20 et/ou à la source de lumière 11. Il en est de même de l'intensité de référence $I_{ref}(t)$. Aussi, le signal de détection $x(t)$ résultant du photodétecteur de mesure correspond à l'intensité $I(t)$ mesurée par ce dernier. Le signal de détection $x(t)$ peut subir des fluctuations qu'il est nécessaire de lisser, car elles ne sont pas représentatives de variations de la concentration de l'espèce gazeuse $c_x(t)$.

Le signal de détection $x(t)$ fait l'objet d'un traitement, décrit par la suite, de façon à obtenir un signal corrigé $y(t)$ selon l'expression :

$$y(t) = \alpha(\hat{y}(t)) + (1 - \alpha)x(t) \quad (2)$$

avec

$$\hat{y}(t) = y(t-1) + v(t-1) \quad (2')$$

(2')

- $\alpha$ est un réel compris entre 0 et 1, formant un premier facteur de pondération ;
- 1 - $\alpha$ forme un deuxième facteur de pondération ;
- $\hat{y}(t)$ est un terme de prédiction de $y(t)$, la prédiction $\hat{y}(t)$ étant calculée à partir des données dont on dispose à l'instant $t$ - 1, antérieur à l'instant de mesure $t$ ;
- $v(t$ - 1) est un signal de variation, établi à l'instant $t$ - 1.

Le traitement du signal de détection $x(t)$, de façon à obtenir le signal corrigé $y(t)$, est effectué par l'unité de traitement 30.

Le signal de variation $v(t$ - 1) est établi à chaque instant $t$ - 1, pour être utilisé, selon l'expression (2') à un instant de mesure postérieur $t$.

A chaque instant de mesure $t$, le signal de variation $v(t)$ est mis à jour, selon l'expression :

$$v(t) = \beta\big(v(t-1)\big) + (1-\beta)[y(t) - y(t-1)] \quad (3)$$

- $\beta$ est un réel compris entre 0 et 1 ;
- $y(t)$ est le signal corrigé à l'instant $t$.

L'expression (2) consiste à :

- pondérer le terme de prédiction $\hat{y}(t)$, par le premier facteur de pondération $\alpha$ ;
- prendre en compte le signal de détection $x(t)$ à l'instant $t$, ce dernier étant pondéré par le deuxième facteur de pondération 1- $\alpha$.

Ainsi, l'expression (2) permet d'effectuer un dosage entre la prédiction $\hat{y}(t)$, effectuée à partir des données disponibles à l'instant $t$ - 1, et la réalité, potentiellement bruitée, cette dernière étant représentée par $x(t)$.

Les valeurs de $\alpha$ et $\beta$ sont de préférence telles que :

- $\alpha$ est compris entre 0.75 et 1. Les inventeurs considèrent qu'il est avantageux que $\alpha$ soit proche de 1, par exemple compris entre 0. 95 et 1, par exemple 0.99
- $\beta$ est compris entre 0.8 et 1, par exemple 0.87.

Lorsque le capteur de gaz comporte un photodétecteur de référence, ce dernier génère un signal de référence $x_{ref}(t)$ représentatif de l'intensité de référence $I_{ref}(t)$ détectée par le photodétecteur de référence. L'intensité de référence est également soumise à des fluctuations statistiques. Le signal de référence $x_{ref}(t)$ peut faire l'objet d'une correction, de manière à obtenir un signal corrigé de référence $y_{ref}(t)$ . Le signal de référence corrigé peut être obtenu par un lissage temporel, par exemple une moyenne temporelle glissante effectuée à partir de signaux de référence $x_{ref}(t)$ successifs.

Dans cet exemple, le deuxième facteur de pondération est le complémentaire, à 1, du premier facteur de pondération $\alpha$ : la somme du premier facteur de pondération et du deuxième facteur de pondération est égale à 1.

Les expressions (2) et (3) sont utilisées de façon itérative. Entre chaque itération, l'instant de mesure est incrémenté. Les expressions (2) et (3) sont calculées à nouveau, à partir d'un signal résultant du détecteur à un instant $t = t$ + 1. Ainsi, Le signal de variation $v(t)$, mis à jour au cours d'un itération, à un instant $t$, est utilisé dans l'expression (2') d'une itération suivante.

La mise en œuvre du procédé suppose une phase d'initialisation, au cours de laquelle le signal corrigé $y(t)$ est considéré comme égal à $x(t)$, ou établi selon une moyenne glissante du signal $x(t)$ et d'au moins un signal $x(t$ - 1) antérieur. La phase d'initialisation permet de déterminer un signal de variation initial $v(t_i)$ et un signal corrigé initial $y(t_i)$ que l'on peut utiliser au cours de la première itération du procédé.

La concentration $\hat{c}_x(t)$ de l'espèce gazeuse $G_x$ peut être estimée à partir de $y(t)$ en utilisant une fonction de calibration de telle sorte que

$$\hat{c}_x(t) = f\big(y(t)\big) \quad (4).$$

La fonction de calibration $f$ est établie au cours d'une phase de calibration, en utilisant le capteur ou un capteur de calibration considérée comme représentatif du capteur utilisé, la concentration de l'espèce gazeuse étant maîtrisée.

Les inventeurs ont comparé une correction du signal selon l'expression (2) ainsi qu'une correction du signal sans prise en compte du signal de variation, donc sans terme de prédiction, selon l'expression :

$$y(t) = \alpha y(t-1) + (1-\alpha)x(t) \quad (5)$$

L'expression (5) a été décrite dans WO 2018/202974 A1. Elle correspond à l'art antérieur. Une correction du signal selon (5) introduit une certaine latence lorsque la concentration de l'espèce gazeuse mesurée subit une brusque variation, qu'il s'agisse d'une augmentation ou d'une diminution de la concentration. Une brusque variation peut par exemple résulter d'une fuite de gaz, et doit être rapidement détectée, pour des raisons de sécurité. De ce fait, il est important de réduire la latence (i-e le temps de réponse) dans l'estimation de la concentration d'espèce gazeuse.

Lorsque la valeur réelle de la concentration de l'espèce gazeuse subit une variation instantanée $\Delta c_x$ entre une concentration initiale $c_1$ et une concentration finale $c_2$, certaines spécifications imposent que la durée minimale pour que la concentration mesurée atteigne 50%, 60% et 90% de la valeur finale $c_2$ soit respectivement inférieure à 10 secondes, 12 secondes et 30 secondes. Le recours à un terme de de prédiction $\hat{y}(t)$, prenant en compte le terme de variation $v(t)$, permet de réduire la latence, comme représenté sur la figure 2. Sur cette figure, les courbes en trait plein, tirets et pointillés schématisent respectivement la variation de concentration réelle, et estimées en mettant en œuvre les expressions (5) et (2).

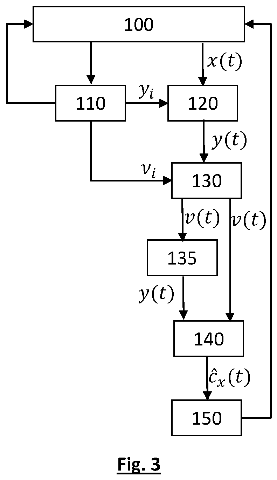

La figure 3 résume les principales étapes permettant la mise en œuvre du procédé.

Etape 100 : acquisition d'un signal de détection $x(t)$ émis par le capteur de gaz. Le signal de détection $x(t)$ est établi à partir de l'intensité $I(t)$ mesurée par le photodétecteur de mesure à l'instant $t$.

Etape 110 : initialisation. Il s'agit de définir le signal de variation initial $v(t_i)$ et le signal corrigé initial $y(t_i)$ précédemment définis. Ces derniers peuvent avoir une valeur prédéfinie, par exemple 0, ou être établis à partir de signaux de détection acquis durant la phase d'initialisation. Dans ce dernier cas, la phase d'initialisation est établie à partir de différents signaux de détection acquis durant des instants d'initialisation. Par exemple, au cours de l'initialisation, le signal corrigé initial $y(t_i)$ peut être établi en établissant une moyenne glissante de plusieurs signaux de détection $x(t_i)$ successifs. Le signal de variation initial $v(t_i)$ peut être obtenu par différence entre deux signaux corrigés initiaux $y(t_i)$ et $y(t_i - 1)$.

Etape 120 : Correction du signal de détection $x(t)$.

Cette étape est mise en œuvre lorsque la phase d'initialisation a été achevée. Au cours de cette étape, à chaque instant de mesure, à partir de $x(t)$, on forme le signal de correction $y(t)$ en mettant en œuvre l'expression (2).

Au cours de la première itération de l'étape 120, $y(t - 1) = y(t_i)$ et $v(t - 1) = v(t_i)$

Etape 130 : Calcul du signal de variation pour l'instant $t$.

Au cours de cette étape, on calcule le signal de variation $v(t)$ en mettant en œuvre l'expression (3). Au cours de la première itération de l'étape 130, $y(t - 1) = y(t_i)$ et $v(t - 1) = v(t_i)$

Etape 140

A partir du signal de correction, estimation de la concentration de l'espèce gazeuse :

$$\hat{c}_x(t) = f\big(y(t)\big).$$

Etape 150 : les étapes 100, et 120 à 140 sont réitérées en incrémentant l'instant de mesure.

Les étapes 110 à 150 sont mises en œuvre par l'unité de traitement 30, à partir du signal de détection $x(t)$ résultant du photodétecteur lors de l'étape 100.

Première variante : utilisation d'un facteur de pénalisation.

Selon une première variante, lors de la mise en œuvre de (2'), le signal de variation $v(t - 1)$ est pénalisé par un facteur de pénalisation $k(t)$, de telle sorte que l'expression (2') est remplacée par :

$$\hat{y}(t) = y(t-1) + k(t)v(t-1) \quad (6)$$

L'expression (2) devient alors

$$y(t) = \alpha\big(y(t-1) + k(t)v(t-1)\big) + (1-\alpha)x(t) \quad (7)$$

Le facteur de pénalisation $k(t)$ peut notamment être calculé à partir :

- d'une estimation de la concentration $\hat{c}_x(t - 1)$ de l'espèce gazeuse à l'instant $t - 1$, à partir du signal corrigé $y(t - 1)$ à l'instant précédent ;
- d'une extrapolation de la concentration $\hat{c}_x(t_+)$ de l'espèce gazeuse à un instant postérieur à l'instant de mesure, où $t_+$ correspond à l'instant postérieur à l'instant de mesure. $\hat{c}_x(t_+)$ est une concentration extrapolée, résultant d'une d'extrapolation, comme décrit par la suite.

On obtient alors un facteur de pénalisation adaptatif $k(t)$, dont la valeur dépend de la concentration de l'espèce gazeuse $\hat{c}_x(t - 1)$ à l'instant précédent l'instant de mesure, et de préférence d'une comparaison entre $\hat{c}_x(t - 1)$ et $\hat{c}_x(t_+)$.

Par exemple,

$$k(t) = e^{-\frac{[\hat{c}_x(t-1)]^n}{\hat{c}_x(t_+)}} \quad (8),$$

où $n$ est un réel compris entre 0 et 1. $n$ est un terme d'ajustement de la loi de Beer-Lambert modifiée, déterminé expérimentalement au cours d'une phase de calibration. L'exponentielle dans l'expression (8) est due à la relation exponentielle entre l'intensité mesuré par le capteur et la concentration de l'espèce gazeuse, explicitée dans (1).

Le facteur de pénalisation est de préférence compris entre 0 et 1, ce qui est le cas lorsque le facteur de pénalisation $k(t)$ est tel qu'explicité dans (8).

Lorsque la concentration $c_x$ subit une augmentation formant un créneau montant, $\hat{c}_x(t - 1) < \hat{c}_x(t_+)$. Dans ce cas, $e^{-1} < k(t) < 1$. Le facteur de pénalisation $k(t)$ tel qu'explicité dans (8) est d'autant plus faible que $\hat{c}_x(t - 1)$ se rapproche de l'estimation $\hat{c}_x(t_+)$. Cela permet de réduire l'inertie de l'estimation induite par le terme de variation $v(t)$ dans la prédiction $\hat{y}(t)$.

Le facteur de pénalisation permet d'atténuer l'erreur effectuée par le terme de prédiction $\hat{y}(t) = y(t - 1) + v(t - 1)$. Plus la concentration $\hat{c}_x(t - 1)$ se rapproche de $\hat{c}_x(t_+)$, plus le facteur de pénalisation tend vers $e^{-1}$, soit environ 0.37.

La concentration extrapolée $\hat{c}_x(t_+)$ résulte d'une extrapolation sur la base d'estimations successives de concentrations $\hat{c}_x(t)$. Il peut par exemple s'agir d'une extrapolation linéaire, de type :

$$\hat{c}_x(t_+) = (\hat{c}_x(t) + [\hat{c}_x(t) - \hat{c}_x(t - 1)] \times 10) \times m \quad (9)$$

m est un poids compris entre 0 et 1, représentant un pourcentage d'une valeur finale de la concentration de l'espèce gazeuse, estimé par $\hat{c}_x(t_+)$. m peut par exemple être égal à 0.85. La valeur finale correspond au terme $(\hat{c}_x(t) + [\hat{c}_x(t) - \hat{c}_x(t - 1)] \times 10)$.

D'une façon plus générale, $\hat{c}_x(t_+) = g(\hat{c}_x(t), \hat{c}_x(t - 1))$ où $g$ est une fonction d'extrapolation.

Le recours au facteur de pénalisation $k(t)$ tel que précédemment défini, et compris entre 0 et 1, permet de pénaliser l'influence du terme de variation $v(t)$ dans la prédiction $\hat{y}(t)$. Cela permet de limiter un phénomène dit d'overshoot (sur-estimation temporaire). L'overshoot correspond à une surestimation temporaire de la concentration $\hat{c}_x(t)$ suite à une brusque augmentation de la concentration $c_x(t)$. Une telle surestimation est due à une certaine inertie induite par le terme de prédiction $\hat{y}(t)$. La surestimation peut entraîner une génération d'une fausse alarme, ce qui n'est pas souhaitable. De façon symétrique, le facteur de pénalisation permet d'éviter un phénomène d'undershoot (sous-estimation), ce dernier correspondant à une sous-estimation temporaire de la concentration $\hat{c}_x(t)$ suite à une brusque diminution de la concentration $c_x(t)$.

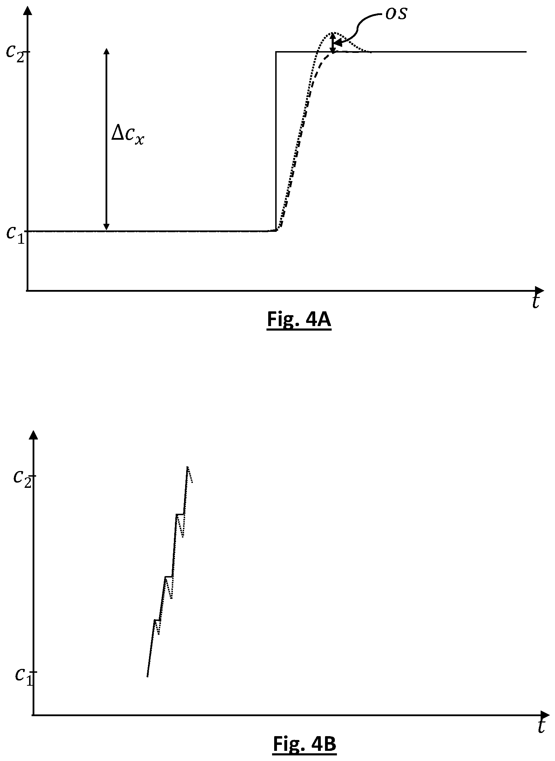

La figure 4A schématise l'effet de réduction d'overshoot procuré par le facteur de pénalisation $k(t)$. Sur cette figure, on a schématisé une brusque augmentation $\Delta c_x$ formant un créneau (trait plein). Les courbes en pointillés et en tirets représentent respectivement les évolutions de $\hat{c}_x(t)$ sans et avec mise en œuvre du facteur de pénalisation $k(t)$. La surestimation a été représentée par une double flèche, désignée par $os$ (overshoot). Il est préférable que la surestimation ne soit pas supérieure à une valeur de consigne spécifiée, par exemple 1500 ppm.

L'effet apporté par le facteur de pénalisation $k(t)$ est décrit par la suite en lien avec les essais expérimentaux.

Deuxième variante : effet anti-rebond

Selon une autre variante, le procédé comporte une étape 135 de comparaison entre :

- le signe de $[x(t) - y(t)]$, c'est-à-dire le signe d'une différence entre le signal $x(t)$ issu du capteur, à l'instant de mesure, et le signal corrigé $y(t)$ à l'instant de mesure, résultant de l'étape 130 ;
- le signe du signal de variation $v(t)$ à l'instant de mesure.

Lorsque $[x(t) - y(t)]$ et $v(t)$ sont de même signe, le signal corrigé $y(t)$ résultant de l'étape 130 est inchangé. Lorsque $[x(t) - y(t)]$ et $v(t)$ sont de signes contraires, le signal $y(t)$ est modifié et prend la valeur du signal corrigé à l'instant précédent :

$y(t) = p \times y(t - 1)$. $p$ est un terme de pondération réel strictement positif dont la valeur dépend du signe de $v(t)$.

- lorsque $v(t) > 0$, $p \geq 1$ : $p$ peut être égal à 1 ou 1,1. la valeur de $p$ peut être ajustée en fonction de $v(t)$.
- lorsque $v(t) < 0$, $p \leq 1$ ; $p$ peut être égal à 1 ou 0,9. la valeur de $p$ peut être ajustée en fonction de $v(t)$.

Cette étape permet d'effectuer un « anti-rebond », en particulier lorsque le signal de détection $x(t)$ se stabilise suite à une brusque variation. Le terme anti-rebond désigne le fait que lors d'une croissance (ou d'une décroissance de $c_x(t)$), la concentration estimée $\hat{c}_x(t)$ peut subir des oscillations. L'effet anti-rebond permet d'obtenir une concentration estimée variant de fonction monotone lors d'une croissance ou d'une décroissance de $c_x(t)$. On a représenté, sur la figure 4B, une estimation $\hat{c}_x(t)$ avec (trait plein) et sans (pointillés) mise en œuvre de cette variante, avec $p = 1$. La figure 4B correspond au cas où la concentration de l'espèce gazeuse est croissante.

Les inventeurs ont mis en œuvre l'invention en utilisant un capteur tel que décrit dans WO2020216809. Le signal de détection résultant du capteur a fait l'objet d'un traitement tel que décrit ci-dessus avec $\alpha$ = 0.99, $\beta$ = 0.87. L'espèce gazeuse considérée était $CH_4$.

Durant ces essais, les inventeurs ont comparé trois façons d'obtenir le signal corrigé $y(t)$ :

i. selon l'expression (5), qui correspond à l'art antérieur ;
ii. selon l'expression (2), qui correspond à une mise en œuvre de l'invention ;
iii. selon l'expression (7), qui correspond à la variante comportent le facteur de pénalisation $k(t)$, ce dernier étant calculé selon l'expression (8) avec $n$ = 0.894.

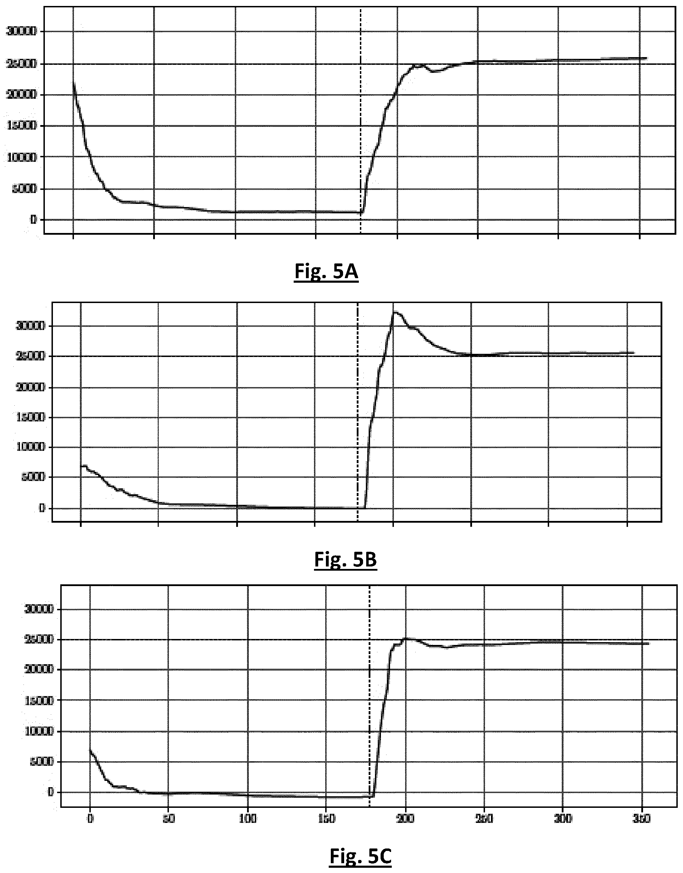

On a fait varier la concentration de $CH_4$ entre 0 et 25000 ppm. Les figures 5A, 5B et 5C représentent une estimation de $\hat{c}_x(t)$ en utilisant des signaux corrigés $y(t)$ déterminés respectivement selon les configurations i), ii) et iii). Sur les figures 5A, 5B et 5C, l'axe des ordonnées correspond à $\hat{c}_x(t)$ (unité ppm) et l'axe des abscisses correspond au temps (unité seconde). Le trait en pointillés vertical correspond à l'instant auquel la concentration de $CH_4$ passe brusquement de 0 à 25000 ppm.

On observe que l'invention (figures 5B ou 5C) permet d'améliorer le temps de réponse, c'est-à-dire la durée entre l'augmentation de la concentration de $CH_4$ et l'instant auquel la concentration $\hat{c}_x(t)$ atteint un certain pourcentage de 25000 ppm. L'effet d'overshoot, précédemment décrit, est notable sur la figure 5B. La comparaison entre les figures 5B er 5C permet d'apprécier l'effet du facteur de pénalisation, qui conduit à une réduction significative de l'overshoot, ce dernier n'étant pas perceptible sur la figure 5C.

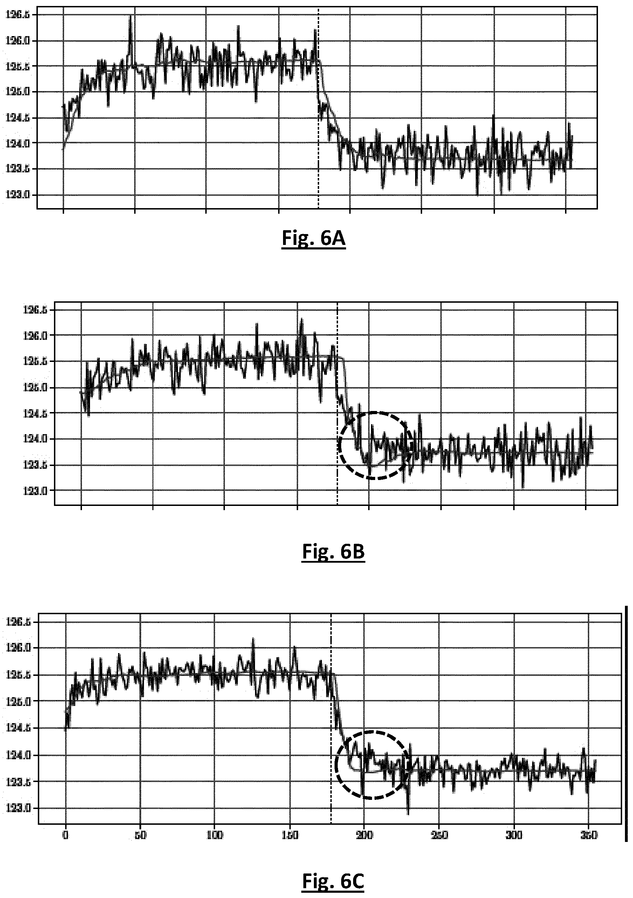

Les figures 6A, 6B et 6C représentent les valeurs $y(t)$ et $x(t)$, ayant permis la détermination de $\hat{c}_x(t)$ respectivement sur les figures 5A, 5B et 5C. L'augmentation de 25000 ppm de $CH_4$ se traduit par une baisse de $x(t)$ et de $y(t)$. La baisse de $x(t)$ et de $y(t)$ résulte d'une absorption accrue de la lumière dans la bande spectrale d'absorption de $CH_4$. Les figures 6A, 6B et 6C permettent d'apprécier l'effet de lissage conféré par l'invention : les courbes représentant les signaux corrigés $y(t)$ ne présentent pas les fluctuations observées sur les courbes montrant les signaux de détection $x(t)$. L'effet de prédiction des signaux corrigés $y(t)$ par rapport aux signaux de détection $x(t)$ est visible dans les parties entourées par un cercle sur les figures 6B et 6C, qui correspondent aux mises en œuvre de l'invention.

Les figures 7A, 7B et 7C montrent une comparaison du temps de réponse à 90% conféré respectivement par chaque configuration i), ii) et iii). De même que les figures 5A, 5B et 5C, les figures 7A, 7B et 7C représentent la concentration $\hat{c}_x(t)$ estimée de $CH_4$ lors d'une augmentation brusque de la concentration de $CH_4$, entre 0 ppm et 25000 ppm. L'axe des ordonnées correspond à $\hat{c}_x(t)$ (unité ppm) et l'axe des abscisses correspond au temps (unité seconde). Le temps de réponse à 90% correspond à la durée entre l'augmentation de la concentration de $CH_4$ et l'instant auquel la concentration estimée $\hat{c}_x(t)$ atteint 90% de la concentration finale de 25000 ppm. Le niveau correspondant à 90% de la concentration finale est représenté par une ligne horizontale en tirets. Le temps de réponse est matérialisé par une ligne verticale en pointillés. On observe que :

- la mise en œuvre des inventions (figures 7B et 7C) engendre une réduction du temps de réponse à 90% par rapport à l'art antérieur (figure 7A) ;
- le recours au facteur de pénalisation (figure 7C) entraîne une réduction de l'overshoot (comparaison figures 7B et 7C), au détriment d'une légère augmentation du temps de réponse à 90%.

Les inventeurs ont exposé 15 capteurs identiques à des sauts de concentration de 25000 ppm de $CH_4$. Pour chaque capteur, 25 essais ont été réalisés. On a déterminé, pour chaque capteur la moyenne des temps de réponse à 90% ainsi qu'un pourcentage d'occurrence d'un overshoot. Le pourcentage d'occurrence correspond au nombre de fois où un overshoot considéré comme significatif est observé sur le nombre total d'essais, ce dernier étant de 25.

La figure 8A représente, pour chaque capteur (axe des abscisses), la moyenne des temps de réponse (axe des ordonnées - unité seconde). L'axe des abscisses correspond à la référence de chaque capteur, chacun d'entre eux étant référencé Pa avec a compris entre 1 et 15. Les capteurs P1, P4, P7, P10 et P13 ont été mis en œuvre selon la configuration i) (art antérieur). Les capteurs P2, P5, P8, P11 et P14 ont été mis en œuvre selon la configuration ii) (invention, sans facteur de pénalisation) Les capteurs P3, P6, P9, P12 et P15 ont été mis en œuvre selon la configuration iii) (invention, avec mise en œuvre du facteur de pénalisation). On observe que :

- l'invention permet une réduction du temps de réponse ;
- la mise en œuvre du facteur de pénalisation (configuration iii) s'accompagne d'une légère augmentation du temps de réponse par rapport à la configuration ii).

La figure 8B représente, pour chaque capteur (axe des abscisses), le nombre moyen de présence d'un overshoot (axe des ordonnées - unité %). Il s'agit du pourcentage d'occurrence d'un overshoot dont l'amplitude est supérieure à un certain seuil. Dans cet exemple, le seuil est de 1500 ppm en dessus de la concentration maximale de $CH_4$, cette dernière étant de 25000 ppm. L'axe des abscisses correspond à la référence de chaque capteur, comme décrit en lien avec la figure 8A.

On observe que :

- l'invention s'accompagne d'un effet d'overshoot ;
- la mise en œuvre du facteur de pénalisation (configuration iii) entraîne une réduction du nombre d'occurrences d'un overshoot significatif, c'est-à-dire supérieur au seuil, par rapport à la configuration ii).

La figure 9 illustre les résultats commentés sur les figures 8A et 8B. Pour chaque capteur, l'axe des abscisses correspond à la moyenne du temps de réponse à 90% (unité seconde) et l'axe des ordonnées correspond au pourcentage d'occurrence d'overshoot (unité %). Les capteurs P1, P4, P7, P10 et P13 sont matérialisés par un point. Les capteurs P2, P5, P8, P11 et P14 sont matérialisés par une croix. Les capteurs P3, P6, P9, P12 et P15 sont matérialisés par un grand cercle.

Une configuration idéale présenterait à la fois un temps de réponse faible et une amplitude d'overshoot faible. Elle est symbolisée par une flèche sur la figure 9. On observe que la configuration iii, qui correspond aux points entourés sur la figure 9, est un bon compromis, permettant de réduire le temps de réponse par rapport à l'art antérieur, tout en s'accompagnant d'un effet d'overshoot raisonnable.

**Revendications**

1. Procédé d'estimation d'une concentration ($\hat{c}_x(t)$) d'une espèce gazeuse ($G_x$) en différents instants de mesure, le procédé mettant en œuvre un capteur de gaz, le capteur de gaz comportant :

   - une enceinte (10), configurée pour contenir un gaz (G);
   - une source de lumière (11) et un photodétecteur (20), le photodétecteur étant agencé pour détecter une lumière, émise par la source de lumière, s'étant propagée à travers le gaz, entre la source de lumière et le photodétecteur ;

   le procédé comportant, à chaque instant de mesure (t) postérieur à une phase d'initialisation, la phase d'initialisation établissant un signal de variation initial et un signal corrigé initial :

   a) formation d'un signal de détection ($x(t)$) par le photodétecteur (20) ;
   b) calcul du signal corrigé ($y(t)$), à l'instant de mesure, le signal corrigé étant établi à partir d'une somme comportant :

      - un terme de prédiction du signal corrigé à l'instant de mesure ($\hat{y}(t)$), pondéré par un premier facteur de pondération ($\alpha$), le terme de prédiction étant déterminé à partir :

         • d'un signal de variation ($v(t - 1)$) calculé à un instant précédent l'instant de mesure ;
         • d'un signal corrigé ($y(t - 1)$) déterminé à l'instant précédent;

      - le signal de détection ($x(t)$), à l'instant de mesure, pondéré par un deuxième facteur de pondération ($1 - \alpha$);

   c) calcul d'un signal de variation ($v(t)$) à l'instant de mesure, le signal de variation étant établi à partir d'une somme pondérée:

- d'une différence ($y(t)$ - $y(t$ - 1)) entre les signaux corrigés respectivement à l'instant de mesure et à l'instant précédent;
- du signal de variation ($v(t$ - 1)) déterminé à l'instant précédent;

    d) estimation de la concentration de l'espèce gazeuse ($\hat{c}_x(t)$), à l'instant de mesure, à partir du signal corrigé ($y(t)$);
    e) réitération des étapes a) à d), en incrémentant l'instant de mesure.

2. Procédé selon la revendication 1, dans lequel lors d'une première itération des étapes a) à e), le signal corrigé ($y_i$) à l'instant précédent et le signal de variation ($v_i$) à l'instant précédent résultent de la phase d'initialisation.

3. Procédé selon l'une quelconque des revendications précédentes, dans lequel après la deuxième itération, dans le terme de prédiction ($\hat{y}(t)$), le signal de variation ($v(t)$), calculé à l'instant précédent, est pondéré par un facteur de pénalisation ($k(t)$) strictement supérieur à 0 et strictement inférieur à 1.

4. Procédé selon la revendication 3, dans lequel le facteur de pénalisation est calculé à partir :

- d'une estimation de la concentration de l'espèce gazeuse à l'instant précédent ($\hat{c}_x(t$ - 1));
- d'une estimation de la concentration de l'espèce gazeuse à un instant postérieur à l'instant de mesure ($\hat{c}_x(t_+)$).

5. Procédé selon la revendication 4, dans lequel après la deuxième itération, l'estimation de la concentration de l'espèce gazeuse à l'instant postérieur à l'instant de mesure ($\hat{c}_x(t_+)$) est réalisée par extrapolation à partir des signaux respectivement corrigés à l'instant de mesure et à l'instant précédent.

6. Procédé selon la revendication 4 ou 5, dans lequel le facteur de pénalisation est établi à partir de $e^{-\frac{\hat{c}_x(t-1)^n}{\hat{c}_x(t_+)}}$, où :

- $\hat{c}_x(t$ - 1) est estimation de la concentration de l'espèce gazeuse à l'instant précédent;
- $\hat{c}_x(t_+)$ est la concentration estimée de l'espèce gazeuse à l'instant postérieur à l'instant de mesure ;
- n est un réel compris entre 0 et 1.

7. Procédé selon l'une quelconque des revendications précédentes, comportant, entre l'étape c) et l'étape d), les sous-étapes :

- (i) calcul d'une différence ($x(t)$ - $y(t)$) entre le signal issu du capteur, à l'instant de mesure, et le signal corrigé à l'instant de mesure, résultant de l'étape b) ;
- (ii) comparaison des signes respectifs du signal de variation ($v(t)$), résultant de l'étape c), et de la différence résultant de la sous-étape (i) ;
- (iii) lorsque la comparaison réalisée dans la sous-étape (ii) indique que les signes comparés sont contraires, remplacement du signal corrigé ($y(t)$), résultant de l'étape b), par le signal corrigé à l'instant précédent ($y(t$ - 1)), éventuellement pondéré par un terme de pondération positif et non nul ($p$).

8. Procédé selon la revendication 7, dans lequel dans la sous-étape (iii), lorsque les signes comparés sont contraires, le signal corrigé ($y(t)$), résultant de l'étape b), est remplacé par le signal corrigé à l'instant précédent, pondéré par le terme de pondération, dont la valeur dépend du signal de variation résultant de l'étape c).

9. Procédé selon l'une quelconque des revendications précédentes, dans lequel le deuxième facteur de pondération (1 - $\alpha$) est le complémentaire à 1 du premier facteur de pondération ($\alpha$).

10. Procédé selon l'une quelconque des revendications précédentes, dans lequel le premier facteur de pondération ($\alpha$) est compris entre 0.75 et 1.

11. Dispositif d'estimation d'une concentration d'une espèce gazeuse dans un gaz, comportant :

- un capteur de gaz (1) , comportant une enceinte (10), destinée à contenir un gaz .
- une source de lumière (11) et un photodétecteur (20), le photodétecteur étant agencé pour détecter une lumière, émise par la source de lumière, s'étant propagée, à travers le gaz, entre la source de lumière et le photodétecteur ;
- le photodétecteur étant configuré pour générer un signal de détection représentatif d'une concentration d'une espèce gazeuse dans l'enceinte, le signal de détection ($x(t)$) étant établi à partir d'une intensité lumineuse détectée par le photodétecteur ;
- une unité de traitement (30), configurée pour mettre en œuvre les étapes b) à e) d'un procédé selon l'une quelconque des revendications précédentes à partir du signal de détection.

**12.** Dispositif selon la revendication 11, dans lequel :

- le capteur de gaz comporte un photodétecteur de référence ($20_{ref}$), le photodétecteur de référence étant agencé pour détecter une lumière, émise par la source de lumière, considérée comme non atténuée par l'espèce gazeuse, le photodétecteur de référence émettant un signal de référence ($x_{ref}(t)$) ;
- le dispositif est tel que suite à la phase d'initialisation, le signal de référence fait l'objet d'un lissage temporel.

**Patentansprüche**

**1.** Verfahren zum Schätzen einer Konzentration ($\hat{c}_x(t)$) einer gasförmigen Spezies ($G_x$) zu verschiedenen Messzeitpunkten, wobei das Verfahren einen Gassensor einsetzt, wobei der Gassensor umfasst:

- eine Kammer (10), die dazu ausgestaltet ist, ein Gas (G) zu enthalten;
- eine Lichtquelle (11) und einen Fotodetektor (20), wobei der Fotodetektor dazu eingerichtet ist, ein von der Lichtquelle emittiertes Licht zu detektieren, das sich durch das Gas hindurch zwischen der Lichtquelle und dem Fotodetektor ausgebreitet hat;

wobei das Verfahren zu jedem Messzeitpunkt (t) nach einer Initialisierungsphase, wobei die Initialisierungsphase ein anfängliches Änderungssignal und ein anfängliches korrigiertes Signal ermittelt, umfasst:

a) Bilden eines Detektionssignals ($x(t)$) durch den Fotodetektor (20),
b) Berechnen des korrigierten Signals ($y(t)$) zu dem Messzeitpunkt, wobei das korrigierte Signal ausgehend von einer Summe ermittelt wird, die umfasst:

- einen Prädiktionsterm des korrigierten Signals zu dem Messzeitpunkt ($\hat{y}(t)$), das durch einen ersten Gewichtungsfaktor ($\alpha$) gewichtet wird, wobei der Prädiktionsterm bestimmt wird ausgehend von:

• einem Änderungssignal ($v(t - 1)$), das zu einem dem Messzeitpunkt vorhergehenden Zeitpunkt berechnet wird;
• einem korrigierten Signal ($y(t - 1)$), das zu dem vorhergehenden Zeitpunkt bestimmt wird;

- das Detektionssignal ($x(t)$) zu dem Messzeitpunkt, das durch einen zweiten Gewichtungsfaktor ($1 - \alpha$) gewichtet wird;

b) Berechnen eines Änderungssignals ($v(t)$) zu dem Messzeitpunkt, wobei das Änderungssignal ausgehend von einer gewichteten Summe ermittelt wird:

- aus einer Differenz ($y(t) - y(t - 1)$) zwischen den korrigierten Signalen zu dem Messzeitpunkt beziehungsweise zu dem vorhergehenden Zeitpunkt;
- aus dem Änderungssignal ($v(t - 1)$), das zu dem dem Messzeitpunkt vorhergehenden Zeitpunkt bestimmt wird;

d) Schätzen der Konzentration der gasförmigen Spezies ($\hat{c}_x(t)$) zu dem Messzeitpunkt ausgehend von dem korrigierten Signal ($y(t)$);
e) Reiteration der Schritte a) bis d) unter Inkrementierung des Messzeitpunkts.

**2.** Verfahren nach Anspruch 1, wobei bei einer ersten Iteration der Schritte a) bis e) das korrigierte Signal ($y_i$) zu dem vorhergehenden Zeitpunkt und das Änderungssignal ($v_i$) zu dem vorhergehenden Zeitpunkt aus der Initialisierungsphase resultieren.

**3.** Verfahren nach einem der vorhergehenden Ansprüche, wobei nach der zweiten Iteration in dem Prädiktionsterm ($\hat{y}(t)$) das zu dem vorhergehenden Zeitpunkt berechnete Änderungssignal ($v(t)$) durch einen Bestrafungsfaktor ($k(t)$) strikt größer als 0 und strikt kleiner als 1 gewichtet wird.

**4.** Verfahren nach Anspruch 3, wobei der Bestrafungsfaktor berechnet wird ausgehend von:

- einer Schätzung der Konzentration der gasförmigen Spezies zu dem vorhergehenden Zeitpunkt ($\hat{c}_x(t-1)$);
- einer Schätzung der Konzentration der gasförmigen Spezies zu einem Zeitpunkt nach dem Messzeitpunkt ($\hat{c}_x(t_+)$).

**5.** Verfahren nach Anspruch 4, wobei nach der zweiten Iteration das Schätzen der Konzentration der gasförmigen Spezies zu dem Zeitpunkt nach dem Messzeitpunkt ($\hat{c}_x(t_+)$) durch Extrapolation ausgehend von den jeweiligen korrigierten Signalen zu dem Messzeitpunkt und zu dem dem Messzeitpunkt vorhergehenden Zeitpunkt ausgeführt wird.

**6.** Verfahren nach Anspruch 4 oder 5, wobei der Bestrafungsfaktor ausgehend von $e^{\frac{\hat{c}_x(t-1)^n}{\hat{c}_x(t_+)}}$ ermittelt wird, worin:

- $\hat{c}_x(t-1)$ die Schätzung der Konzentration der gasförmigen Spezies zu dem vorhergehenden Zeitpunkt ist;
- $\hat{c}_x(t_+)$ die geschätzte Konzentration der gasförmigen Spezies zu dem Zeitpunkt nach dem Messzeitpunkt ist;
- *n eine* reale Zahl zwischen 0 und 1 ist.

**7.** Verfahren nach einem der vorhergehenden Ansprüche, umfassend, zwischen dem Schritt c) und dem Schritt d), die Teilschritte:

- (i) Berechnen einer Differenz ($x(t) - y(t)$) zwischen dem aus dem Sensor hervorgegangenen Signal zu dem Messzeitpunkt und dem aus dem Schritt b) resultierenden korrigierten Signal zu dem Messzeitpunkt;
- (ii) Vergleichen der jeweiligen Vorzeichen des aus dem Schritt c) resultierenden Änderungssignals ($v(t)$) und der aus dem Teilschritt (i) resultierenden Differenz;
- (iii) wenn der in dem Teilschritt (ii) durchgeführte Vergleich ergibt, dass die verglichenen Vorzeichen entgegengesetzt sind, Ersetzen des aus dem Schritt b) resultierenden korrigierten Signals ($y(t)$) durch das korrigierten Signal zu dem vorhergehenden Zeitpunkt ($y(t-1)$), gegebenenfalls gewichtet durch einen positiven Gewichtungsterm ungleich null ($p$).

**8.** Verfahren nach Anspruch 7, wobei in dem Teilschritt (iii), wenn die verglichenen Vorzeichen entgegengesetzt sind, das aus dem Schritt b) resultierende korrigierte Signal ($y(t)$) durch das korrigierte Signal zu dem vorhergehenden Zeitpunkt, gewichtet durch den Gewichtungsterm, dessen Wert von dem aus dem Schritt c) resultierenden Änderungssignal abhängt, ersetzt wird.

**9.** Verfahren nach einem der vorhergehenden Ansprüche, wobei der zweite Gewichtungsfaktor ($1 - \alpha$) das Komplement zu 1 des ersten Gewichtungsfaktors ($\alpha$) ist.

**10.** Verfahren nach einem der vorhergehenden Ansprüche, wobei der erste Gewichtungsfaktor ($\alpha$) zwischen 0,75 und 1 beträgt.

**11.** Vorrichtung zum Schätzen einer Konzentration einer gasförmigen Spezies in einem Gas, umfassend:

- einen Gassensor (1), der eine Kammer (10) umfasst, die dazu bestimmt ist, ein Gas zu enthalten
- eine Lichtquelle (11) und einen Fotodetektor (20), wobei der Fotodetektor dazu eingerichtet ist, ein von der Lichtquelle emittiertes Licht zu detektieren, das sich durch das Gas hindurch zwischen der Lichtquelle und dem Fotodetektor ausgebreitet hat;
- wobei der Fotodetektor dazu ausgestaltet ist, ein Detektionssignal zu erzeugen, das für ein Konzentration einer gasförmigen Spezies in der Kammer repräsentativ ist, wobei das Detektionssignal ($x(t)$) ausgehend von einer von dem Fotodetektor detektierten Lichtintensität ermittelt wird;
- eine Verarbeitungseinheit (30), die dazu ausgestaltet ist, die Schritte b) bis e) eines Verfahrens nach einem der vorhergehenden Ansprüche ausgehend von dem Detektionssignal durchzuführen.

**12.** Vorrichtung nach Anspruch 11, wobei:

- der Gassensor einen Referenzfotodetektor ($20_{ref}$) umfasst, wobei der Referenzfotodetektor dazu eingerichtet ist, ein von der Lichtquelle emittiertes Licht zu detektieren, das als durch die gasförmige Spezies nicht gedämpft betrachtet wird, wobei der Referenzfotodetektor ein Referenzsignal ($x_{ref}(t)$) emittiert;

- die Vorrichtung derart ist, dass im Anschluss an die Initialisierungsphase das Referenzsignal Gegenstand einer zeitlichen Glättung ist.

**Claims**

1. Method for estimating a concentration ($\hat{c}_x(t)$) of a gaseous species at different measurement times, the method using a gas sensor, the gas sensor comprising:

   - a chamber (10) configured to contain a gas;
   - a light source (11) and a photodetector (20), the photodetector being arranged to detect light emitted by the light source that has propagated through the gas between the light source and the photodetector;

   the method comprising, at each measurement time (t) subsequent to an initialisation phase, the initialisation phase establishing an initial variation signal and an initial corrected signal:

   a) formation of a detection signal ($x(t)$) by the photodetector (20);
   b) calculation of the corrected signal ($y(t)$) at the measurement time, the corrected signal being established from a sum comprising:

   - a prediction term of the corrected signal at the measurement time ($\hat{y}(t)$), weighted by a first weighting factor ($\alpha$), the prediction term being determined from:

     • a variation signal ($v(t - 1)$) calculated at a previous time preceding the measurement time;
     • a corrected signal ($y(t - 1)$) determined at the previous time;

   - the detection signal ($x(t)$) at the measurement time, weighted by a second weighting factor ($1 - \alpha$);

   c) calculation of a variation signal ($v(t)$) at the measurement time, the variation signal being established from a weighted sum:

   - a difference ($y(t) - y(t - 1)$) between the corrected signals at the measurement time and at the previous time;
   - the variation signal ($v(t - 1)$) determined at the measurement time;

   d) estimation of the concentration of the gaseous species ($\hat{c}_x(t)$) at the measurement time from the corrected signal ($y(t)$);
   e) repeating steps a) to d), incrementing the measurement time.

2. Method according to claim 1, in which during a first iteration of steps a) to e), the corrected signal ($y_i$) at the previous time and the variation signal ($v_i$) at the previous time result from the initialisation phase.

3. Method according to any of the preceding claims, wherein after the second iteration, in the prediction term ($\hat{y}(t)$), the variation signal ($v(t)$), calculated at the previous time, is weighted by a penalty factor ($k(t)$) strictly greater than 0 and strictly less than 1.

4. Method according to claim 3, in which the penalty factor is calculated from:

   - an estimate of the concentration of the gaseous species at the previous time ($\hat{c}_x(t - 1)$);
   - an estimate of the concentration of the gaseous species at a time after the measurement time ($\hat{c}_x(t_+)$).

5. Method according to claim 4, wherein after the second iteration, the estimation of the concentration of the gaseous species at the time after the measurement time ($\hat{c}_x(t_+)$) is performed by extrapolation from the signals corrected respectively at the measurement time and at the time preceding the measurement time.

6. Method according to claim 4 or 5, wherein the penalty factor is established from $e^{-\frac{\hat{c}_x(t-1)^n}{\hat{c}_x(t_+)}}$, where:

   - $\hat{c}_x(t - 1)$ is an estimate of the concentration of the gaseous species at the previous time;

- $\hat{c}_x(t_+)$ is the estimated concentration of the gaseous species at the time after the measurement time;
- $n$ is a real number between 0 and 1.

7. Method according to any of the preceding claims, comprising, between step c) and step d), the sub-steps:

- (i) calculating a difference ($x(t) - y(t)$) between the signal from the sensor at the measurement time and the corrected signal at the measurement time resulting from step b);
- (ii) comparing the respective signs of the variation signal ($v(t)$) resulting from step c) and the difference resulting from sub-step (i);
- (iii) when the comparison performed in sub-step (ii) indicates that the compared signs are opposite, replacing the corrected signal ($y(t)$), resulting from step b), with the signal corrected at the previous time ($y(t - 1)$), possibly weighted by a positive and non-zero weighting term ($p$).

8. Method according to claim 7, in which in sub-step (iii), when the compared signs are opposite, the corrected signal ($y(t)$), resulting from step b), is replaced by the corrected signal at the previous time, weighted by the weighting term, whose value depends on the variation signal resulting from step c).

9. Method according to any of the preceding claims, wherein the second weighting factor ($1 - \alpha$) is the complement to 1 of the first weighting factor ($\alpha$).

10. Method according to any of the preceding claims, wherein the first weighting factor ($\alpha$) is between 0.75 and 1.

11. Device for estimating the concentration of a gaseous species in a gas, comprising:

- a gas sensor (1) comprising an enclosure for containing a gas.
- a light source (11) and a photodetector (20), the photodetector being arranged to detect light emitted by the light source that has propagated through the gas between the light source and the photodetector;
- the photodetector being configured to generate a detection signal representative of a concentration of a gaseous species in the enclosure, the detection signal ($x(t)$) being established from a light intensity detected by the photodetector;
- a processing unit (30), configured to implement steps b) to e) of a method according to any of the preceding claims based on the detection signal.

12. Device according to claim 11, wherein:

- the gas sensor comprises a reference photodetector ($20_{ref}$), the reference photodetector being arranged to detect light emitted by the light source, considered to be unattenuated by the gaseous species, the reference photodetector emitting a reference signal ($x_{ref}(t)$) ;
- the device is such that, following the initialisation phase, the reference signal is subject to temporal smoothing.

**Fig. 1**

**Fig. 2**

**Fig. 3**

**Fig. 4A**

**Fig. 4B**

**Fig. 5A**

**Fig. 5B**

**Fig. 5C**

**Fig. 6A**

**Fig. 6B**

**Fig. 6C**

**Fig. 7A**

**Fig. 7B**

**Fig. 7C**

**Fig. 8A**

**Fig. 8B**

**Fig. 9**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5026992 A
- WO 2007064370 A2
- WO 2018202974 A1
- US 2008114552 A
- WO 2020216809 A